Europäisches Patentamt

(19) European Patent Office

Office européen des brevets

(11) Numéro de publication : **0 435 781 A2**

# (12) DEMANDE DE BREVET EUROPEEN

(21) Numéro de dépôt : 90420496.3

(22) Date de dépôt : 19.11.90

(51) Int. Cl.⁵ : **C08J 5/12**, C09J 5/02,
// C08L21:00

(30) Priorité : 21.11.89 FR 8915996

(43) Date de publication de la demande :
03.07.91 Bulletin 91/27

(84) Etats contractants désignés :
AT BE CH DE DK ES GB GR IT LI LU NL SE

(71) Demandeur : PECHINEY RHENALU
6, place de l'Iris Tour Manhattan LA DEFENSE 2
F-92400 COURBEVOIE (FR)

(72) Inventeur : Rebreyend, Catherine
3, rue de la Monta
F-38120 St Egreve (FR)
Inventeur : Petit, Dominique
Les Côtes
F-38340 Pommiers la Placette (FR)
Inventeur : Marsaud, Serge
La Drey, Le Verdin
F-38500 Voiron (FR)
Inventeur : Kucza, Monique
La Gatelière
F-38960 St Etienne de Crossey (FR)

(74) Mandataire : Vanlaer, Marcel et al
PECHINEY 28, rue de Bonnel
F-69433 Lyon Cédex 3 (FR)

(54) **Procédé de collage du caoutchouc sur l'aluminium.**

(57)    L'invention est relative à un procédé de collage du caoutchouc sur l'aluminium anodisé mettant en oeuvre un organosilane sulfuré.

Ce procédé consiste au cours d'une première étape à anodiser la surface de l'aluminium destinée à recevoir le caoutchouc dans un milieu acide contenant au moins un organosilane soluble dans ledit milieu et possédant une fonction d'accélération de la vulcanisation puis au cours d'au moins une étape ultérieure à traiter le produit obtenu par au moins un organosilane appartenant au groupe constitué par les organosilanes solubles et possédant une fonction d'accélération de la vulcanisation et les organosilanes sulfurés ayant une fonction donneur de soufre, l'une au moins des étapes ultérieures comportant nécessairement l'utilisation d'un desdits organosilanes sulfurés, enfin à sécher le produit traité et lui appliquer à chaud le caoutchouc de manière à le vulcaniser.

Ce procédé trouve son application dans la réalisation de bandages de roues, de bandes d'insonorisation, d'isolateurs de vibrations, de revêtements de réservoirs, de broyeurs ou de cylindres pour l'impression offset, de glissières de vitres de voitures, de blocs aimantés destinés à la fermeture de portes etc...

EP 0 435 781 A2

# PROCEDE DE COLLAGE DU CAOUTCHOUC SUR L'ALUMINIUM

Cette invention est relative à un procédé de collage du caoutchouc sur l'aluminium anodisé mettant en oeuvre un organosilane sulfuré.

Dans ce qui suit, on entend par aluminium l'élément lui-même avec ses impuretés habituelles ainsi que ses alliages et par caoutchouc le caoutchouc naturel, les caoutchoucs synthétiques vulcanisables et leurs mélanges.
Ces produits peuvent se présenter sous forme de feuilles minces, bandes, plats, pièces moulées de toute épaisseur.

Les composites formés par ces deux types de matériaux sont bien connus. On les utilise, par exemple, pour la réalisation de bandages de roues, de bandes d'insonorisation, d'isolateurs de vibrations, de revêtements de réservoirs, de broyeurs ou de cylindres pour l'impression offset, de glissières de vitres de voitures, de blocs aimantés destinés à la fermeture de portes, etc...

L'intérêt de tels composites, c'est qu'ils possèdent à la fois les propriétés de résistance mécanique du métal et les propriétés élastiques et/ou d'inertie chimique du caoutchouc.

Toutefois, pour que le composite développe pleinement ces propriétés, il faut que ses composants adhèrent parfaitement l'un à l'autre et que cette adhérence se maintienne dans le temps, quelle que soit la sévérité des contraintes auxquelles il sera soumis lors de son utilisation, telles que : forces importantes de traction, de compression, de cisaillement, température élevée, cycles thermiques rapides et de grande ampleur, milieux humides et corrosifs, etc... et ce maintien de l'adhérence est un des problèmes majeurs qui se posent aux fabricants de tels composites.

Certes, de nombreuses solutions ont été proposées jusqu'ici. On peut citer, par exemple, l'utilisation d'un produit du commerce portant la marque "CHEMOSIL", sorte de laque qui est déposée à la surface de l'aluminium par pulvérisation puis cuite pendant 3 minutes à 200°C et 4 à 5 minutes à 160°C ; cette opération étant répétée plusieurs fois pour donner un film de 5 μm d'épaisseur environ sur lequel est ensuite appliqué le caoutchouc. Outre son prix relativement élevé, ce produit a l'inconvénient d'émettre des vapeurs nocives lors de sa manipulation et de sa cuisson et de nécessiter des moyens spéciaux de protection du personnel d'exploitation.

Consciente de ces inconvénients et soucieuse de trouver une solution simple au problème de collage du caouthouc sur l'aluminium qui permette de maintenir inaltérée l'interface des composants quelle que soit la sévérité des contraintes auxquelles seront soumis les composites réalisés, la demanderesse a cherché et mis au point un procédé dans lequel la surface de l'aluminium destiné à être mise en contact avec le caoutchouc est anodisée en milieu sulfurique, puis traitée par une solution organique d'un organosilane sulfuré et séchée avant d'être appliquée à chaud sur le caoutchouc. Cette solution a d'ailleurs fait l'objet d'une demande de brevet déposée en France sous le N° 88-08476.
Cependant, bien que les résultats obtenus soient intéressants, la demanderesse a cherché à améliorer davantage la qualité des produits obtenus. Elle y est parvenue en mettant au point un procédé dans lequel comme dans la demande antérieure l'aluminium est anodisé et où on met en oeuvre un organosilane sulfuré mais qui est caractérisé en ce qu' au cours d'une première étape l'on anodise la surface de l'aluminium destinée à recevoir le caoutchouc dans un milieu acide contenant au moins un organosilane soluble dans ledit milieu et possédant une fonction d'accélération de la vulcanisation puis au cours d'au moins une étape ultérieure, on traite le produit obtenu par au moins un organosilane appartenant au groupe constitué par les organosilanes solubles et possédant une fonction d'accélération de la vulcanisation et les organosilanes sulfurés ayant une fonction donneur de soufre, l'une au moins des étapes ultérieures comportant nécessairement l'utilisation d'un desdits silanes sulfurés, enfin on sèche le produit traité et lui applique à chaud le caoutchouc de manière à le vulcaniser.

Ainsi l'invention comporte une succession d'étapes au cours desquelles la surface en aluminium sur laquelle va être appliqué le caoutchouc est d'abord anodisée après avoir été de préférence dégraissée ou décapée à la soude. Cette anodisation est réalisée en continu dans un milieu acide quelconque mais de préférence en milieu sulfurique ou phosphorique qui sont les milieux utilisés de façon classique en anodisation.

Dans ce milieu est dissous un (ou plusieurs) organosilane(s) soluble(s) en milieu aqueux possédant une fonction d'accélération de la vulcanisation du caoutchouc et qui viennent se greffer sur la couche d'oxyde formée lors de l'anodisation.
Puis le produit obtenu est ensuite traité au cours des étapes ultérieures au moins une fois par un organosilane sulfuré ayant une fonction donneur de soufre.

Dans ces étapes ultérieures, on peut faire alterner des traitements par lesdits silanes solubles et lesdits organosilanes sulfurés en utilisant chaque fois soit un seul silane, soit un mélange des silanes du même type ou de types différents.

Enfin, le produit traité est séché pour compléter les réactions de greffage des organosilanes sur l'aluminium et pour évaporer l'eau dans laquelle est dissous l'organosilane soluble ou le solvant organique généralement utilisé pour dissoudre l'organosilane sulfuré. On y applique alors à chaud le caoutchouc.

Dans ces conditions, les organosilanes greffés sur la couche d'oxyde lors du déroulement du procédé vont en combinaison développer à chaud la formation de soufre et permettre par une vulcanisation accélérée d'assurer un collage parfait du caoutchouc sur l'aluminium.

De préférence, les organosilanes solubles ont pour formule générale : $(R_1O_3)$ Si $(CH_2)n$ Y où Y est le radical permettant l'accélération de la vulcanisation, $R_1$ un groupement alkyl possédant au moins 1 atome de carbone et n un nombre $\geq 3$.

Les meilleurs résultats sont obtenus avec les silanes aminés du type $(R_1O)_3$ Si $(CH_2)_3$ $NH_2$ car ils ont un bon pouvoir d'accélération de la vulcanisation.

Les concentrations optima se situent entre 0,01 et 5% en poids.
Le greffage s'effectue très bien quand l'anodisation est menée dans des conditions électriques, de concentration d'acide, de température et de temps qui permettent de développer un film d'oxyde d'épaisseur comprise entre 0,05 et 0,5 µm. Des épaisseurs plus faibles ou plus fortes s'accompagnent d'une diminution de l'adhérence.

Le traitement du produit anodisé peut s'effectuer entre autres possibilités par trempage ou pulvérisation dans une solution d'organosilane qui peut être aqueuse ou organique suivant le type de silane.
Quant à l'organosilane sulfuré, on utilise de préférence celui qui répond à la formule

$[(R_1O_3)$ Si $(CH_2)_3 - (S_2)]2$ où $R_1$ est un groupement alkyl possédant au moins 1 atome de carbone.

Le procédé utilisé de préférence comporte une anodisation avec un organosilane animé et une étape ultérieure de traitement en présence d'un organosilane sulfuré.

Quant au séchage, il s'effectue de préférence à une température suffisante pour éliminer les solvants mais inférieure à 250°C pour éviter de diminuer le pouvoir d'adhérence des silanes.

Enfin l'application du caoutchouc s'effectue de préférence à une température comprise entre 150 et 250°C en exerçant une pression inférieure à 0,1 MPa, celle exercée par le poids du caoutchouc reposant sur l'aluminium étant généralement suffisante.

L'invention peut être illustrée à l'aide de l'exemple d'application suivant :

On a réalisé un composite aluminium-caoutchouc pour glissière de vitres de voitures.

Le cadre destiné à recevoir le caoutchouc était en alliage 5154 suivant les normes de l'Aluminium Association et le caoutchouc synthétique et vulcanisable.

L'anodisation de l'aluminium a été réalisée en continu dans une solution d'acide phosphorique à 100 g/l à une température de 67°C sous une tension de 62 Volts et une intensité de 50 Ampères avec une densité de courant apparente de 35 A/dm2 et en présence de l'organosilane $(CH_3CH_2O)_3$ Si $(CH_2)_3$ $NH_2$ à une concentration de 5 g/l.

Puis l'aluminium anodisé a été trempé dans un bain d'éthanol contenant à l'état dissous 1% en poids du silane sulfuré de formule $[(CH_3 - CH_2O)_3Si (CH_2)_3 (S_2)]2$

Après séchage dans une étuve à 200°C pendant 1 minute, on a appliqué vers 200°C le caoutchouc qui s'est vulcanisé.

L'adhérence obtenue était parfaite : la rupture étant cohésive et l'interface n'étant pas perturbée.

## Revendications

1. Procédé de collage de caouthouc sur de l'aluminium anodisé mettant en oeuvre un organosilane sulfuré caractérisé en ce que au cours d'une première étape, on anodise la surface de l'aluminium destinée à recevoir le caoutchouc dans un milieu acide contenant au moins un organosilane soluble dans ledit milieu et possédant une fonction d'accélération de la vulcanisation, puis au cours d'au moins une étape ultérieure, on traite le produit obtenu par au moins un organosilane appartenant au groupe constitué par les organosilanes solubles et possédant une fonction d'accélération de la vulcanisation et les organosilanes sulfurés ayant une fonction donneur de soufre, l'une au moins des étapes ultérieures comportant nécessairement l'utilisation d'un desdits silanes sulfurés ; enfin on sèche le produit traité et lui applique à chaud le caoutchouc de manière à le vulcaniser.

2. Procédé selon la revendication 1 caractérisé en ce que la surface de l'aluminium est préalablement dégraissée puis décapée à la soude.

3. Procédé selon la revendication 1 caractérisé en ce que le milieu acide est constitué par un acide appartenant au groupe constitué par l'acide sulfurique et l'acide phosphorique.

4. Procédé selon la revendication 1 caractérisé en ce que l'organosilane soluble a pour formule générale : $(R_1O)_3$ Si$(CH_2)n$ Y où Y est le radical permettant l'accélération de la vulcanisation, $R_1$ un groupement alkyl possédant au moins 1 atome de carbone, n un nombre $\geq 3$.

5. Procédé selon la revendication 4 caractérisé en ce que l'organosilane soluble est du type aminé et a pour formule générale $(R_1O)_3$ Si $(CH_2)_3$ $NH_2$.

6. Procédé selon la revendication 1 caractérisé en ce que la concentration de l'organosilane soluble dans le milieu acide est comprise entre 0,01 et 5% en poids.

7. Procédé selon la revendication 1 caractérisé en ce que l'anodisation s'effectue dans des conditions électriques, de concentration d'acide, de température et de temps permettant de développer un film d'oxyde d'épaisseur comprise entre 0,05 et 0,5 μm.

8. Procédé selon la revendication 1 caractérisé en ce que le traitement consiste en une opération de trempage ou de pulvérisation de la surface de l'aluminium anodisé avec une solution aqueuse ou organique d'un ou plusieurs organosilanes.

9. Procédé selon la revendication 1 caractérisé en ce que l'organosilane sulfuré a pour formule générale $[(R_1O)_3 Si (CH_2)_3 - (S_2)]2$ où $R_1$ est un groupement alkyl possédant au moins 1 atome de carbone.

10. Procédé selon la revendication 1 caractérisé en ce que l'anodisation est réalisée dans un milieu acide contenant un organosilane aminé et le traitement avec un organosilane sulfuré.

11. Procédé selon la revendication 1 caractérisé en ce que le séchage s'effectue à une température suffisante pour évaporer le ou les solvants et inférieure à 250°C.

12. Procédé selon la revendication 1 caractérisé en ce que l'on applique le caoutchouc à une température comprise entre 150°C et 250°C en exerçant une pression inférieure à 0,1 MPa.